Europäisches Patentamt

European Patent Office

Office européen des brevets

(11) Numéro de publication : **0 652 269 A1**

## (12) DEMANDE DE BREVET EUROPEEN

(21) Numéro de dépôt : **94402370.4**

(51) Int. Cl.$^6$ : **C09D 133/06,** C09J 133/06

(22) Date de dépôt : **21.10.94**

(30) Priorité : **10.11.93 FR 9313416**

(43) Date de publication de la demande :
**10.05.95 Bulletin 95/19**

(84) Etats contractants désignés :
**AT BE CH DE DK ES FR GB GR IE IT LI LU NL
PT SE**

(71) Demandeur : **RHONE-POULENC CHIMIE
25, Quai Paul Doumer
F-92408 Courbevoie Cédex (FR)**

(72) Inventeur : **Joanicot, Mathieu
177-179 avenue Jean Jaurés
F-92290 Chatenay Malabry (FR)**

(74) Mandataire : **Seugnet, Jean Louis et al
RHONE-POULENC CHIMIE,
Direction de la Propriété Industrielle,
25, Quai Paul Doumer
F-92408 Courbevoie Cédex (FR)**

(54) **Liant latex pour composition de revêtement.**

(57)    La présente invention concerne un liant pour composition de revêtement à base de latex filmogènes préparés à partir de monomères éthyléniques insaturés caractérisé en ce que ledit liant comporte pour 100 parties en poids de latex A (calculées sur la base de l'extrait sec) ayant une granulométrie comprise entre 100 et 500 nm, de 0,1 à 100 parties en poids de latex B (calculés sur la base de l'extrait sec) ayant une granulométrie comprise entre 5 et 40 nm.

   Utilisation du liant ci-dessus à la préparation de compositions d'enduction papetières, des vernis et peintures, des adhésifs, des adhésifs sensibles à la pression etc...

EP 0 652 269 A1

La présente invention concerne un liant latex pour composition de revêtements.

Les compositions de revêtements à base d'un liant latex ont de nos jours une importance technique et économique considérable. Parmi ces compositions de revêtements, on peut en particulier citer les compositions papetières c'est à dire d'enduction de papier, et plus particulièrement les compositions de couchage de papier, les compositions de peinture, en particulier les compositions de vernis et peinture pour intérieur et pour extérieur, les compositions textiles, les compositions d'enduction du bois, les compositions adhésives, les compositions adhésives sensibles à la pression (PSA), les compositions de revêtement pour mortier de ciment, etc...

Ces compositions de revêtement comportent en plus du liant au moins un composant supplémentaire choisi parmi une charge, un pigment, un tensio-actif, un agent épaississant, un antioxydant, un liant naturel (amidon; caséine), un agent dispersant, un agent antimousse, un biocide, etc...

Une des principales difficultés à résoudre pour leur mise au point réside principalement en ce que les compositions du type ci-dessus doivent avoir des propriétés de surfaces différentes des propriétés de volume. Ainsi, dans le cas où ces compositions comportent des charges et ou des pigments, le latex doit coller les charges entre elles et au support.

En outre, pour que le revêtement ait un bel aspect lisse sans aspérités dans le but notamment d'obtenir de bonnes propriétés d'imprimabilité, les particules de latex doivent migrer à la surface du revêtement.

L'expérience pratique montre que l'obtention de propriétés de surfaces correctes est antinomique à l'obtention de bonnes propriétés de volume.

La présente invention a permis de résoudre le problème ci-dessus en proposant un liant latex particulier permettant d'obtenir un compromis tout à fait intéressant entre les propriétés de volume et les propriétés de surface.

Il a été en effet trouvé selon l'invention un liant pour composition de revêtement à base de latex filmogènes préparés à partir de monomères éthyléniques insaturés, caractérisé en ce que ledit liant comporte pour 100 parties en poids de latex A (calculées sur la base de l'extrait etc) ayant une granulométrie comprise entre 100 et 500 nm, de 0,1 à 100 parties en poids de latex B (calculées sur la base de l'extrait sec) ayant une granulométrie comprise entre 5 et 40 nm, de préférence entre 10 et 30 $\mu$m.

De façon préférée, le latex A a une granulométrie comprise entre 120 et 300 nm. En outre, pour l00 parties de latex A, on utilise de préférence de 0,5 à 20 parties, ou mieux encore de l à l0 parties de latex B.

## Préparation du latex A :

L'obtention du latex A est décrit dans de nombreux documents brevets tels que par exemple US 5.194.539 et EP 486.374. De plus, les latex A sont disponibles commercialement.

Les monomères polymérisables sont constitués par au moins un monomère choisi parmi le styrène, le butadiène, les esters acryliques et les nitriles vinyliques.

Par esters acryliques on désigne les esters de l'acide acrylique et de l'acide méthacrylique avec les alcanols en $C_1$-$C_{12}$, de préférence $C_1$-$C_8$, tels que l'acrylate de méthyle, l'acrylate d'éthyle, l'acrylate de propyle, l'acrylate de n-butyle, l'acrylate d'isobutyle, l'acrylate de 2-éthylhexyle, le méthacrylate de méthyle, le méthacrylate d'éthyle, le méthacrylate de n-butyle, le méthacrylate d'isobutyle.

Les nitriles vinyliques incluent ceux ayant de 3 à 12 atomes de carbone, en particulier l'acrylonitrile et le méthacrylonitrile.

Le styrène peut-être remplacé en totalité ou en partie par l'alpha-méthylstyrène ou le vinyltoluène.

Parmi les monomères éthyléniquement insaturés polymérisables avec les monomères ci-dessus, et dont la quantité peut aller jusqu'à 40 % en poids du total des monomères on peut citer :

- les esters vinyliques d'acide carboxylique comme l'acétate de vinyle, le versatate de vinyle, le propionate de vinyle,
- les acides mono-et di-carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leur dérivés N-substitués,
- les amides des acides carboxyliques insaturés comme l'acrylamide, le méthacrylamide, le N-méthalolacrylamide ou -méthacrylamide,
- les monomères éthyléniques comportant un groupe acide sulfonique et ses sels alcalins ou d'ammonium par exemple l'acide vinylsulfonique, l'acide vinylbenzène sulfonique, l'acide alpha-acrylamido méthylpropane-sulfonique, le 2-sulfoéthylèneméthacrylate,
- les monomères éthylèniquement insaturés comportant un groupe amino secondaire, tertiaire ou quaternaire ou un groupe hétérocyclique contenant de l'azote par exemple les vinylpyridines, le vinylimida-

2

zole, les (meth)acrylates d'aminoalkyle et les (meth)acrylamides d'aminoalkyle comme le diméthylaminoéthylacrylate ou méthacrylate, le ditertiobutylamino-éthylacrylate ou - méthacrylate, le diméthylamino méthylacrylamide ou -méthacrylamide ... de même que les monomères zwitterioniques comme l'acrylate de sulfopropyl (diméthyl) aminopropyle ...

- les esters des acides (meth) acryliques avec des alcanediols contenant de préférence 2-8 atomes de carbone tels que le mono (meth) acrylate de glycol, le mono(meth)acrylate d'hydroxypropyle, le mono(meth) acrylate de 1-4 butanediol ainsi que les monomères comportant deux doubles liasons polymérisables comme le diméthacrylate d'éthylène-glycol.

En plus des monomères cités, on peut encore mettre en oeuvre, en quantité mineures, comprises également entre 0,1 et 5 % des monomères éthylèniques insaturés ayant un caractère réticulable tels que le (meth) acrylate de glycidyle ou les silanes vinyliques et acryliques.

A titre d'exemple de compositions pour la production de latex liants on peut citer les compositions contenant en poids 25-90 % de préférence 45-75 % de styrène et/ou acrylonitrile, 75-10 % de préférence 55-25 % de butadiène et/ou acrylates, 0-20 % de préférence 1-10 % d'acide carboxylique insaturé, 0-40 % de préférence 0-15 % d'autres monomères éthyléniques insaturés.

La polymérisation est réalisée de manière connue en soi, en émulsion aqueuse, des monomères polymérisables en présence d'au moins un initiateur radicalaire et de préférence en présence d'un agent de transfert par exemple du type mercaptan avec une concentration en monomères dans le milieu réactionel comprise généralement entre 20 et 60 % en poids.

Tout type d'initiateur ou amorceur à radicaux libres habituels dans la polymérisation en émulsion peut convenir.

Des exemples d'initiateurs comprennent les hydroperoxydes tels que l'eau oxygénée, l'hydroperoxyde de diisopropylbenzène, les persulfates de sodium, de potassium ou d'ammonium, et les initiateurs cationiques comme l'azobis (isobutyronitrile) le 4-4' azobis (acide 4-cyano valérique).

Ces initiateurs peuvent être associés à un réducteur comme par exemple le bisulfite. La quantité se situe en général entre 0,05 et 2 % en poids par rapport à la quantité des monomères.

La température de polymérisation, fonction de l'initiateur mis en oeuvre, est généralement comprise entre 50°C et 100°C, de préférence entre 70 et 50°C. La stabilisation des particules est assurée, si nécessaire, par tout système de stabilisation colloïdale connu, comme les émulsifiants anioniques, cationiques, amphotères et non-ioniques.

Les émulsififants anioniques sont par exemple les alkylsulfates, les alkylsulfonates, les alkylarylsulfonates et les alkylphosphates alcalins; les dialkylsulfosuccinates; les sels de sodium; potassium ou ammonium des acides gras saturés ou non. Des exemples d'émulsifiants cationiques sont les sels d'alkylpyridinium ou d'alkylammonium comme le chlorure ou le bromure de N-éthyl dodecylammonium, le chlorure ou le bromure de cetylammonium. Comme émulsifiants non-ioniques on cite en particulier les dérivés polyoxyéthylénés eVou polyoxypropylénés des alcools gras, des acides gras ou des alkylphénols.

La polymérisation peut être réalisée en continu, en discontinu ou semi-continu avec introduction d'une partie des monomères en continu et être du type "ensemencé" ou "incrementale" selon toute variante connue pour l'obtention des particules de structure homogène et hétérogène.

## Préparation du latex B:

Par commodité dans la suite de l'exposé, on dira que le latex B est formé de nanoparticules. N'importe quel monomère à insaturation éthylénique peut-être choisi comme produit de départ et, en particulier, les monomères et les initiateurs de polymérisations mentionnés ci-dessous pour le latex A.

Parmi les polymères pouvant constituer lesdites particules de latex B, on peut citer les homopolymères ou les copolymères contenant des motifs dérivés de monomères vinyliques, acryliques, vinylaromatiques, d'esters vinyliques, d'alkylesters d'acides a et insaturés, d'esters d'acides carboxyliques insaturés, de chlorure de vinyle, de chlorure de vinyldène et/ou de diènes.

A titre illustratif, on peut plus particulièrement mentionner les monomères suivants:
- Le styrène et ses dérivés (vinyltoluène, éthylvinylbenzène)
- Les esters, hydroxyesters et amides de l'acide (méth)-acrylique tels que le méthacrylate de méthyle, l'acrylate de butyle, (méth)-acrylamide,
- Les esters vinyliques (acétate de vinyle, propionate de vinyle),
- Les chlorures de vinyle et vinylidène,
- Les vinylpyridines (2-vinylpyridine, 4-vinylpyridine, 2-méthyl, 5-vinylpyridine)
- Les di (éthyl) amino-alkyl (méth)-acrylates
- Les di (éthyl)amino-alkyl (méth)-acrylamides

- L'allylamide
- L'éthylène imine
- Le (méth)-acrylonitrile
- Le N-vinylimidazole
- Les dialkylaminométhyl-styrènes
- La vinylpyrrolidone
- Le divinylbenzène et ses dérivés
- Les diènes conjugués (butadiène...)
- Les dérivés polyallyliques (tétraallyléthylène...)
- Les (méth) acrylates de polyols (diméthacrylate d'éthylène glycol ...)
- Le méthylène-bis (acrylamide)
- L'acide-bis (acrylamido) acétique

A titre de monomères vinyliques et acryliques convenant à l'invention, on peut plus particulièrement citer ceux dérivant du styrène, de l'acide acrylique, d'ester acrylique de type esters acryliques de N-hydroxysuccinimide comme le N-acryloyloxysuccinimide et le N-acryloyloxyphtalimide, l'acide méthacrylique, le maléate de monobenzyle, la 2-vinylpyridine, le méthylsulfonate de styrène, le chlorométhylstyrène, l'hydroxypropylméthacrylate, l'hydroxybutylacrylate, l'hydroxyéthylacrylate, l'acrylonitrile eVou l'acroléine. Selon une variante, les particules présentent à leur surfaces des groupements ionogènes ou réactifs, choisis de préférence parmi $OH$, $SO_3H$, $SO_3R$, $SO_4R$, $COOH$, $CHO$, $PhCH_2Cl$, $NH_2$, $NR_2$, $NR_3$ avec R étant un radical alkyle en C1-C3, $CONH_2$, $NH-NH_2$, $CN$, $CO_2(CH_2)nOH$ avec n représentant un entier compris entre 1 et 8, ainsi que les esters de N-hydroxyimide.

Les fonctions, présentes à la surface des nanoparticules, peuvent également dériver de la transformation chimique ultérieure, par exemple par substitution nucléophile, d'un ou plusieurs groupements réactifs portés par la chaîne polymère constituant les nanoparticules.

Les nanoparticules selon l'invention possèdent une distribution granulométrique resserrée. Cette monodispersité en taille de particule permet d'accéder à la surface exacte d'adsorption des nanoparticules et par conséquent à la capacité de fixation optimale de celles-ci notamment sur les charges et pigments et sur les supports à recouvrir.

On considère comme resserrée toute distribution granulométrique dont l'écart type est inférieur ou égal à 30 %, et de préférence de l'ordre de 20 %.

Les nanoparticules sont susceptibles d'être obtenues par polymérisation d'une microémulsion directe du ou des monomères correspondants. Par le terme microémulsion, on entend désigner une dispersion thermodynamiquement stable par opposition à une dispersion seulement cinétiquement stable qui au terme d'un certain délai coalesce.

On met en oeuvre la polymérisation d'une microémulsion directe et la récupération de ladite dispersion aqueuse à l'issue de la polymérisation, ladite microémulsion directe étant obtenue au préalable par titration à l'aide d'une quantité efficace d'un tensio-actif ionique soit d'une émulsion directe stabilisée par au moins un tensio-actif ionique, soit d'une émulsion inverse stabilisée par au moins un tensio-actif non ionique, les deux émulsions, dites émulsions initiales, étant constituées d'au moins un monomère en dispersion aqueuse.

La dispersion aqueuse de nanoparticules ainsi obtenue peut en outre subir, le cas échéant, une opération de purification.

Le procédé implique donc, dans une première étape, la formation de celle microémulsion directe.

Dans le cas d'une émulsion initiale inverse, la microémulsion correspondante est préparée par la méthode dite de l'inversion inspirée du procédé SCHULMAN (J.PHYS.Chem. 1959, 63 p 1677).

Elle consiste à formuler, dans un premier temps, une émulsion de type eau dans l'huile, l'huile étant constituée du ou des monomères considérés, à l'aide d'un émulsifiant non ionique lipophile c'est à dire de faible balance hydrophile-lipophile HLB. L'huile constitue environ 70 % en poids du mélange. La quantité de ce tensio-actif non ionique est ajoutée de manière à obtenir une émulsion stabilisée.

De manière générale, une faible quantité d'un tensio-actif anionique est en outre ajoutée. Sa quantité est approximativement de 0,5 % en poids par rapport au poids de monomère. Cette émulsion est ensuite inversée par addition d'une solution aqueuse d'un surfactant non ionique hydrophile, c'est à dire de fort HLB jusqu'à observation de l'inversement de phase. Ce phénomène d'inversion est macroscopiquement décélable puisqu'au cours de la titration on observe successivement le passage d'une émulsion laiteuse à un gel puis à une microémulsion directe, stable, transparente et de faible viscosité.

L'émulsifiant non ionique mis en oeuvre peut être choisi parmi les dérivés nonylphénolpolyéthoxylés (NP). Le charactère lipophile ou hydrophile de ces composés varie en fonction du nombre de ses motifs éthoxy. A titre de couple émulsifiant ionique de faible HLB/émulsifiant non ionique de fort HLB on peut ainsi citer les couples NP5/NP1 5, NP1 5/NPI 2, NP7/NPI 2 et NP7/NPI 5.

Selon un mode de réalisation préféré, l'émulsion inverse contient en outre et préalablement à sa titration un tensio-actif anionique. Il peut s'agir par exemple du dodécylbenzènesulfonate de sodium (DBS), du laurylsulfate de sodium (SDS) ou du dioctylsulfosuccinate de sodium (aérosol OT®).

Les dispersions de nanoparticules, obtenues par celle technique d'émulsion inverse, contiennent une quantité importante de tensio-actifs et ne peuvent donc être utilisées directement. L'élimination des tensio-actifs en excès est obtenue ultérieurement par mise en oeuvre d'une technique de purification. Celle élimination est de préférence réalisée par dialyse qui a pour avantage de ne pas altérer la taille des particules. Aucun phénomène de floculation n'est observé.

Selon un autre procédé de préparation de nanoparticules du latex B, on ajoute de façon incrémentale dans le réacteur au moins un des monomères à insaturation éthylénique cité ci-dessus capable de polymériser en émulsion aqueuse et on ajoute de façon incrémentale un initiateur de polymérisation et au moins un tensio-actif de telle sorte qu'on obtienne des particules de nanolatex de granulométrie inférieure à 40 nm.

Le terme "addition incrémentale" englobe n'importe quelle forme d'addition d'une petite partie du monomère et/ou de l'initiateur à la solution aqueuse durant une période de temps nécessaire pour que tout le monomère et tout l'initiateur soient ajoutés.

Ceci inclue les additions cycliques), les additions discontinues et leur combinaisons.

De préférence, l'addition de monomère et d'initiateur est continue et maintenue constante durant une certaine période de temps.

Les monomères préférés utilisés sont les acrylates et les méthacrylates d'alkyle dont la partie alkyle présente de I à 10 atomes de carbone ainsi que les acides carboxyliques à insaturation éthylénique tel que l'acide acrylique, méthacrylique,maléique, fumarique et itaconique ainsi que les amides correspondants.

Dans le cas de copolymères dérivant en partie de monomères acryliques, on utilise une quantité de monomère acrylique comprise typiquement entre 30 et 99 % du poids total des monomères de préférence de 50 à 90 %.

Pour certaines applications, il est souhaitable que le latex B soit réticulé. Pour se faire, on ajoute au milieu réactionnel de polymérisation en émulsion aqueuse un agent de réticulation choisi parmi les N-alkylol amides tels que N- methylol acrylamide, le N-méthylol maléimide, certains monomères difonctionnels tels que le divinylbenzène, le divinylnaphthalène et le divinylcyclohexane ainsi que divers diacrylates tel que l'éthylène glycoldiméthacrylate.

Les quantités d'agents de réticulation sont généralement comprises entre 0,05 et 10 %, de 0,1 à 5 % et de préférence de 0,1 à I,0 % basé sur le poids total de tous les monomères ajoutés.

Comme indiqué plus haut, n'importe quel initiateur de polymérisation est utilisable.

Toutefois, dans le cas où l'initiateur est soluble dans l'eau, ce qui est le cas des peroxydes et des persulfates, il est critique de maintenir constant l'ionicité du milieu réactionnel en enlevant une partie de l'eau du milieu réactionnel et en ajoutant cette même eau au courant d'alimentation en initiateur.

Il a été en effet trouvé qu'en maintenant une ionicité constante dans le milieu réactionnel, on évite l'agglomération des particules et on obtient des particules présentant une granulométrie plus resserrée. En diluant l'initiateur soluble dans l'eau avec une quantité appropriée d'eau, on maintient constante la force ionique du milieu réactionnel.

Pour préparer les latex B, on peut utiliser un procédé de polymérisation semi-continu ou continu. Ceci met en oeuvre l'addition de façon incrémentale du monomère, de l'agent de réticulation si nécessaire et des solutions d'initiateur dans le réacteur qui est chauffé à une température comprise généralement entre environ 45 et 90°C en incluant de l'eau et au moins un tensio-actif durant un certain laps de temps par opposition au procédé par"batch~discontinu.

Eventuellement, le réacteur peut contenir une petite quantité de monomère avant le début de la polymérisation incrémentale en vue d'agir comme une "semence". Une telle petite quantité de monomère est généralement inférieure à 30 % et de préférence inférieure à 10 % du poids total de monomère utilisé.

La vitesse d'addition du monomère est généralement gouvernée par des paramètres variés tels que les dimensions du réacteur, l'accroissement de la température due à la réaction exothermique, la capacité de refroidissement et similaires de telle sorte que la température de réaction soit généralement maintenue dans une fourchette spécifique.

On maintient le mélange réactionnel à une température comprise entre la température ambiante (10 à 25°C) et le point d'ébullition de la solution aqueuse. La réaction est en général effectuée sous pression atmosphérique mais elle peut être augmentée pour favoriser la polymérisation.

L'alimentation en monomère et l'alimentation en initiateur doivent être fusionnées en une seule et même alimentation dans le cas ou l'initiateur est soluble.

En outre, si l'initiateur est soluble dans l'eau et est un sel ionique tel que le persulfate d'ammonium, cet initiateur est introduit dans le réacteur de telle sorte que l'ionicité dans le milieu réactionnel soit maintenu à un niveau constant. On arrive typiquement à ce but en transférant initialement une partie de l'eau du milieu réactionnel à l'alimentation en initiateur pour générer des concentrions ioniques sensiblement égales à la fois dans l'alimentation et dans le réacteur.

L'alimentation dans le réacteur sur un mode incrémentale permet d'obtenir généralement une concentration stabilisée en radicaux libres qui permet d'éviter les basses concentrations en radicaux observées lors des charges uniques en initiateur et les durées d'alimentation prolongées. C'est la disponibilité en continu en radicaux libres qui permet à la formation de la nouvelle chaîne et de la particule, de rentrer efficacement en compétition avec l'addition de monomère à des particules déjà existantes ce qui conduit à des particules de latex B présentant une monodispersité améliorée (c'est à dire une granulométrie resserrée).

Pour les termes "granulométrie" ou "taille de particules", on entend selon l'invention la dimension du diamètre moyen du volume de la particule mesurée par spectroscopie de photocorellation. Les particules de latex B ont une taille de particules comprise généralement entre 5 et 40 nm et de façon encore plus préférée, entre 10 et 30 nm.

Bien entendu, les propriétés du latex B dépendent dans une grande mesure des monomères choisis pour leur préparation.

Les polymères constitutifs des latex B peuvent avoir une température de transition vitreuse Tg comprise entre - 54°C et + 130°C. Bien entendu, ces Tg doivent être choisies en fonction du type de compositions de revêtement choisis. Une règle simple, mais pas unique pour le liant selon l'invention, est qu'avantageusement la Tg du latex B soit similaire à la Tg du latex A. Celle régle est applicable en particulier aux peintures.

Quand le liant selon l'invention est utilisé dans des compositions papetières, on utilise généralement comme latex A un latex A d'un copolymère organique choisi parmi un copolymère styrène/butadiène, styrène/acrylate et styrène/butadiène/acrylate.

On ajoute au liant du pigment comme par exemple une argile minérale telle du kaolin, du carbonate de calcium, de l'oxyde de titane, du blanc satin, de l'hydrargillite, du talc, du sulfate de baryum, du plâtre ainsi que des adjuvants divers tels que des agents dispersants, des liants naturels tels que de l'amidon, des biocides, des agents antimousse, des agents glissants etc...

Une composition de couchage comporte généralement :
- 1 00 parties en poids de pigment,
- 2 à 25, en poids de liant,
- 1 à 10 parties en poids d'adjuvants tels que ceux cités ci-dessus.

La teneur en liant est plus faible (2 à 8 jours) pour les compositions pour l'heliogravure (Rotogravure) elle est plus importante (6 à 15 poutres) pour les compositions offset.

Les compositions de couchage selon l'invention présente un meilleur taux de couverture, c'est à dire que par rapport aux compositions connues, les compositions selon l'invention permettent d'obtenir une couverture du papier satisfaisante en utilisant moins de composition.

De plus, le liant selon l'invention permet de mieux masquer les charges et permet d'obtenir une meilleure prise d'encre ce qui rend les compositions papetières selon l'invention plus particulièrement intéressante pour l'héliogravure ("Rotagravure").

Les compositions selon l'invention visent également des compositions adhésives sensibles à la pression (PSA) comportant un liant selon l'invention. Les compositions sont classiquement à base d'un latex A acrylique tel que par exemple ceux décrits dans les brevets US-A- 5 164 441 et GB-A I . 257 940.

Le latex B est de préférence dur avec une Tg supérieure à 0°C est préparé avec les mêmes monomères (généralement un (meth)acrylate d'alkyle et un acide (meth)acrylique) .

On a trouvé conformément à l'invention que l'addition simultanée au latex B, de 0,01 à 0,3 % en poids d'un polymère hydrosoluble tel que de la carboxymethylcellulose permet d'obtenir un tack (pouvoir collant) asymétrique par remontée du latex B en surface au moment du séchage. En outre, l'utilisation de nano-latex B durs (Tg supérieure ou égale à 0) réduit le "blocking" c'est à dire de "tack" autrement dit le pouvoir collant).

La présente invention vise également plus spécifiquement les compositions de peinture comportant le liant selon l'invention dont les latex A et B sont de préférence essentiellement à base de copolymère acrylique ou styrène-acrylate à base d'au moins un monomère carboxylique monooléfinique alpha/bêta insaturé, tel que les acides (meth)acrylique et d'au moins un ester d'acide (meth)acrylique d'un alcool primaire ou secondaire ayant de 1 à 18 atomes de carbone et éventuellement du styrène. De tels latex A sont par exemple décrits dans US-A- 3 320198 et dans EP-A5 010 000 cités comme référence.

Dans les peintures pour extérieure, il est recommandé que le latex A ait une Tg inférieure à 0°C et que le latex B est une Tg supérieure à 0°C de préférence supérieure à 10°C.

En effet, dans ce cas particulier, la peinture, utilisée en extérieur, présentera une résistance élevée à la salissure due à la migration en surface des particules du latex B.

Pour faire une peinture acrylique au styrène/acrylate, on mélange de façon connue le liant latex de préférence neutralisé par une base (par exemple ammoniaque ou amine), à une dispersion pigmentaire contenant des adjuvants usuels ainsi que des pigments et des matières de charge pulvérulentes.

On a constaté de façon surprenante et inattendue que le liant, selon l'invention, permet la résistance à l'abrasion humide sans affecter la stabilité.

En outre, comme le latex B a tendance à migrer à la surface externe de la peinture, on peut moduler la "dureté" de celle surface par un choix adapté de la Tg du (co)polymère constitutif du latex B

De préférence, dans cette application peinture, le latex B présente une Tg comprise entre - 50 et + 50°C de préférence entre - 30 et + 30°C.

Les exemples suivants sont donnés à titre illustratif nullement limitatif.

Dans tout ce qui suit ou ce qui précède, sauf mentions contraires express, les parties et pourcentages sont en poids.

## EXEMPLE 1 :

Préparation d'un latex A

Dans un réacteur de 25 litres en acier inoxydable, muni d'une agitation et d'une double enveloppe à circulation d'eau permettant de régler la température à 80°C à l'intérieur du réacteur durant la polymérisation, on introduit les monomères suivants :
- 83 parties en poids d'eau,
- 9 parties en poids de styrène,
- 75,5 parties en poids d'acrylate de butyle,
- 10 parties en poids d'acrylate d'éthyl-2 hexyle,
- 0,5 parties en poids de diméthacrylate d'éthylèneglycol,
- 2,7 parties en poids d'acide acrylique,
- 0,5 partie en poids d'acrylamide,
- 0,5 partie en poids de sulfoéthylméthacrylate de sodium,
- 0,1 partie en poids d'alkylsulfonate de sodium,
  1,6 partie en poids de persulfate d'ammonium.
On effectue la polymérisation à 80°C pendant 10 h.

Le latex neutralisé Lo a une granulométrie moyenne de 0,15 $\mu$m, une Tg de - 40°C, un extrait sec de 53,3 %, un pH de 6 et une viscosité Brookfield mesurée à 50 t/mn de 280 mPa.s.

## EXEMPLE 2 :

2-1 Préparation d'un latex B (1).

Dans un réacteur de 1 litre en acier inoxydable muni d'une agitation et d'une double enveloppe à circulation d'eau permettant de régler la température à l'intérieur du réacteur, on introduit dans le réacteur un courant réactionnel constitué de :
65 parties d'acrylate de butyle,
25 parties d'acide méthacrylique,
10 parties de méthacrylate de méthyle.
1 partie de VAZO-64(®) (2,2' - azobis-isobutyronitrile en solution dans le méthacrylate de méthyle.

Cette solution d'alimentation est introduite de façon régulée dans le réacteur qui contient 185 parties d'eau et 3 parties de dodecyle sulfate de sodium.

On maintient le 25 réacteur à 85°C sous agitation constante.

A la fin de l'addition du monomère, on maintient encore le réacteur à 85°C, pendant une autre heure. Le mélange réactionnel est ensuite porté à une conversion presque complète par traitement avec 0,015 parties d'hydroperoxyde de t-butyle et 0,015 parties de métasulbifite de sodium, à une température de 62°C.

On obtient un latex à 25 % d'extraits secs avec une taille de particules de 14 nm.

Le latex est de clair de couleur et présente un Tg d'environ - 5°C.

2-2 Préparation du latex B (2)

A une solution contenant 2,57 parties de lauryl sulfate de sodium et 241 parties d'eau, on ajoute 0,15 parties de persulfate d'ammonium préalablement dissous dans 0,3 partie d'eau. Après une période d'initiation de 5 minutes, on introduit un mélange de 43 parties d'acrylate de butyle et 57 parties de méthacrylate de butyle, dans la solution pendant 2 heures. On porte la température à 92°C pendant 30 minutes et ensuite on refroidit et on filtre.

On obtient un latex gris bleu présentant une teneur en extrait sec de 23,10 %.

Ce latex présente une taille de particule inférieure à 30 nm et une Tg de 0°C.

2-3 Préoaration du latex B (3)

On reproduit exactement le mode opératoire de l'exemple 2-2 sauf qu'on utilise 47 % de méthacrylate de méthyle, 43 % d'acrylate de butyle et 10 % d'acide 1 O méthacrylique.

Ce latex ainsi obtenu présente une taille de particule inférieure à 40 nm et une Tg de + 20°C.

2-4 Préparation du latex B (4)

On reproduit exactement le mode opératoire de l'exemple 2-2 sauf qu'on utilise 20 % de méthacrylate de méthyle, 70 % d'acrylate de butyle et 10 % d'acide méthacrylique. Ce latex ainsi obtenu présente une taille de particule inférieure à 40 nm et une tg 20 de - 20°C.

**EXEMPLE 3 :**

Préparation des liants

On prépare les liants $L_1$, $L_2$, $L_3$ et $L_4$ par simple mélange à pH légèrement acide de 100 parties de latex A avec respectueusement 10 parties de latex B(1), B(2), B(3) et B(4). Les liants $L_1$, $L_2$, $L_3$ et $L_4$ ainsi obtenus sont à environ 50 % d'extrait secs.

Préparation de la peinture :

Dans un disperseur pour peinture, on prépare par simple mélange la pâte pigmentaire ayant la composition suivante (en parties en poids) :

| | |
|---|---|
| Eau | 3000 |
| Tylose MH 6000 XP ®) (épaississant) | 40 |
| Coatex P 50 ®g (dispersantacrylique) | 37 |
| Clérol TPE 714 ®) (antimousse) | 20 |
| Proxel BD ®) (biocide) | 9 |
| TiO2 RL68 | 530 |
| Omyalite 90 (carbonate de calcium de granulométrie < 1µm) | 2130 |
| Durcol 5 (carbonate de calcium de | |

granulométrie inférieure à 5 µm)        3200

à 89,66 parties de cette pâte pigmentaire on ajoute 15 parties d'un liant choisit parmi $L_2$, $L_3$ et $L_4$ et 0,9 parties d'eau pour obtenir respectivement une peinture $P_2$, $P_3$, et $P_4$ qui présente une Concentration Pigmentaire en Volume (CPV) d'environ 75 %.

Caractéristiques des liants $L_2$, $L_3$ et $L_4$ et des peintures $P_2$, $P_3$, $P_4$

Sur les liants $L_2$, $L_3$ et $L_4$ et des peintures $P_2$, $P_3$, $P_4$ qui détermine :
- la viscosité Brookfield à 50 t/min(v).
- la stabilité au stockage 28 jours à 55°C.

Pour ce faire, on porte à 55°C pendant 28 jours un échantillon de liant ou de peinture dans un récipient à l'abri de l'air. La stabilité (S) du liant ou de la peinture est donnée par le rapport des viscosités Brookfield des peintures mesurées à 50 t/min à 20°C au bout de 30 jours sur la viscosité initiale.

Sur les liants $L_2$, $L_3$ et $L_4$, on mesure en outre le pH, l'extrait sec (%) et la température minimun de formation de film (TMFF en°C)); c'est à dire la température la plus basse à laquelle on obtient un film sur les peintures P2, P3 et P4 on effectue un test de résistance à l'abrasion humide (RAH) qui est effectué à l'aide d'un abrasimètre C~~ selon la norme DIN 53778. La RAH est évalué en nombre de cycles au bout desquels la peinture est érodée.

Les résultats obtenus sont rassemblés dans le tableau 1 ci-après en ce qui concerne les liants et dans le tableau 2 ci-après en ce qui concerne les peintures.

**TABLEAU 1**

| Liant | pH | ES % | (mPa.s) | S 28 j/55°C | TMFF (C) |
|-------|-----|------|---------|-------------|----------|
| $L_2$ | 7,7 | 47,9 | 2080 | 0,75 | 0 |
| $L_3$ | 8 | 47,8 | 1200 | 0,65 | 0 |
| $L_4$ | 7,8 | 48,0 | 600 | 1,05 | 0 |

**TABLEAU 2**

| Peinture | "Liant utilisé | V (mPa.S) | S 28 j/55°C | RAH (nb de cycles) |
|----------|----------------|-----------|-------------|--------------------|
| P2 | L2 | 4080 | 1 | 3910 |
| P3 | L3 | 4440 | 1,15 | 1370 |
| P4 | L4 | 4120 | 1,1 | 3400 |
| Po | LA | 3560 | 1,05 | 2550 |

La peinture Po est une peinture témoin préparée seulement avec le liant LA.

Des tableaux 1 et 2 ci-dessus, il apparaît que l'on obtient des peintures ayant des viscosités satisfaisantes et restant parfaitement stables à l'issue des 28 jours à 55°C.

On remarque par ailleurs que l'adjonction de liant B à tg=0°C améliore grandement la RAH.

**Revendications**

1. Liant pour composition de revêtement à base de latex filmogènes préparés à partir de monomères éthyléniques insaturés, caractérisé en ce que ledit liant comporte, pour 100 parties en poids de latex A (calculées sur la base de l'extrait sec) ayant une granulométrie comprise entre 100 et 500 nm, de 0,1 à 100 parties en poids de latex B (calculés sur la base de l'extrait sec) ayant une granulométrie comprise entre 5 et 40 nm.

2. Liant selon la revendication 1, caractérisé en ce que, pour 100 parties de latex A ayant une granulométrie comprise entre 120 et 300 nm, ledit liant comporte 0,5 à 20 parties, de préférence de 1 à 10 parties de latex B ayant une granulométrie comprise entre 10 et 30 nm.

3. Liant pour composition de revêtement selon la revendication 1 ou 2, caractérisé en ce qu'il est utilisé dans des compositions d'enduction de papier, de peinture, de vernis, pour enduction textile, pour enduction du bois, dans des compositions adhésives, dans des compositions adhésives sensibles à la pression et dans des compositions de revêtement pour mortier de ciment.

EP 0 652 269 A1

| Office européen des brevets | RAPPORT DE RECHERCHE EUROPEENNE | Numéro de la demande EP 94 40 2370 |
|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 041 125 (BAYER AG) <br> * revendications 1,6; tableaux 6-c,6-d * <br> --- | 1 | C09D133/06 <br> C09J133/06 |
| X | CHEMICAL ABSTRACTS, vol. 80, no. 4, 28 Janvier 1974, Columbus, Ohio, US; abstract no. 16549, 'water-emulsion composition for lustrous coating' page 106 ; <br> * abrégé * <br> & JP-A-58 049 823 (SHIMOKAWA & KAJI) <br> ----- | 1 | |

**DOMAINES TECHNIQUES RECHERCHES (Int.Cl.6)**

C09D
C09J

Le présent rapport a été établi pour toutes les revendications

| Lieu de la recherche | Date d'achèvement de la recherche | Examinateur |
|---|---|---|
| LA HAYE | 20 Janvier 1995 | Schueler, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

11